# EUROPEAN PATENT APPLICATION

(11) **EP 2 295 383 A1**
(43) Date of publication of application: **16.03.2011**
(21) Application number: 09700057.4
(22) Date of filing: 17.04.2009
(51) Int. Cl.: C03C 8/04, C03C 8/02, C03C 8/24, H01M 2/08, H01M 14/00

(54) **GLASS COMPOSITION FOR DYE-SENSITIZED SOLAR CELL AND MATERIAL FOR DYE-SENSITIZED SOLAR CELL**

(30) Priority: 18.04.2008 JP 2008108767; 25.12.2008 JP 2008328881
(71) Applicant: Nippon Electric Glass Co., Ltd., Otsu-shi Shiga 520-8639 (JP)
(72) Inventor: YAMADA, Tomoko, Otsu-shi Shiga 520-8639 (JP); SAWADA, Masahiro, Otsu-shi Shiga 520-8639 (JP); HAYASHI, Masaaki, Otsu-shi Shiga 520-8639 (JP); AMANO, Kouji, Otsu-shi Shiga 520-8639 (JP)
(74) Representative: Tetzner, Michael
(86) International application number: PCT/JP2009/057740
(87) International publication number: WO 2009/128527

(57) **Abstract**

The glass composition for a dye-sensitized solar cell of the present invention is **characterized by** including, as a glass composition, in terms of mass%, 60 to 87% of Bi₂O₃, 3 to 12% of B₂O₃, 0 to 20% of ZnO, and 0.5 to 10% of SiO₂+Al₂O₃+ZrO₂.

## Description

### Technical Field

The present invention relates to a glass composition for a dye-sensitized solar cell and a material for a dye-sensitized solar cell, and more specifically to a glass composition for a dye-sensitized solar cell and a material for a dye-sensitized solar cell which are suitable for sealing a transparent electrode substrate and a counter electrode substrate of a dye-sensitized solar cell, forming a partition wall for dividing cells, and overcoating a collector electrode.

### Background Art

The dye-sensitized solar cell which was developed by Gratzel et al. is low in cost compared with solar cells each using a silicon semiconductor, and there are abundant raw materials needed for the production of the dye-sensitized solar cell, and hence, the dye-sensitized solar cell is expected as a next-generation solar cell.

The dye-sensitized solar cell includes: a transparent electrode substrate having a transparent conductive film; a porous oxide semiconductor electrode including a porous oxide semiconductor layer (mainly a TiO₂ layer), which is formed on the transparent electrode substrate; a dye such as a Ru-dye, which is adsorbed to the porous oxide semiconductor electrode; an iodine electrolyte solution containing iodine; a counter electrode substrate on which a catalyst film and a transparent conductive film are formed; and the like.

There are used a glass substrate, a plastic substrate, and the like for the transparent electrode substrate and the counter electrode substrate. When the plastic substrate is used for the transparent electrode substrate, the resistivity of a transparent electrode film becomes large and the photoelectric conversion efficiency of the dye-sensitized solar cell lowers. On the other hand, when the glass substrate is used for the transparent electrode substrate, the resistivity of the transparent electrode film hardly increases, and hence, the photoelectric conversion efficiency of the dye-sensitized solar cell can be maintained. Under the circumstances described above, in recent years, the glass substrate has been used as the transparent electrode substrate.

In the dye-sensitized solar cell, the iodine electrolyte solution is filled between the transparent electrode substrate and the counter electrode substrate. In order to prevent the leakage of the iodine electrolyte solution from the dye-sensitized solar cell, the peripheries of the transparent electrode substrate and the counter electrode substrate need to be sealed. Further, in order to effectively extract the generated electrons, a collector electrode (e.g., Ag or the like is used therefor) may be formed on the transparent electrode substrate. In this case, there is a need to overcoat the collector electrode and prevent a situation that the collector electrode is eroded by the iodine electrolyte solution. In addition, in the case of forming a cell circuit on one sheet of glass substrate, a partition wall may be formed between the transparent electrode substrate and the counter electrode substrate.

### Prior Art Documents

Patent Document 1: JP 1-220380 A
Patent Document 2: JP 2002-75472 A
Patent Document 3: JP 2004-292247 A

### Summary of the Invention

### Problems to be solved by the Invention

In a dye-sensitized solar cell, it is the improvement in long-term durability that is an object for practical application. One of the reasons for which the long-term durability is impaired is, for example, as follows. Solar cell members (sealing material, collector electrode, and the like) react with an iodine electrolyte solution, and the solar cell members and the iodine electrolyte solution are degraded. In particular, the tendency is remarkable when a resin is used for the sealing material and an organic solvent such as acetonitrile is used for the iodine electrolyte solution. In this case, the resin is eroded by the iodine electrolyte solution, and hence, the iodine electrolyte solution is leaked from the solar cell, whereby cell performances remarkably deteriorate. In the case where a resin is used for overcoating a collector electrode or for forming a partition wall in the similar way, the resin is also eroded by the iodine electrolyte solution, and hence, there occurs deterioration of the collector electrode, tearing of the partition wall, or the like.

In view of the above circumstances, there are proposed methods in which a resin is not used for a sealing material. For example, in Patent Document 1, it is described that the peripheries of a transparent electrode substrate and a counter electrode substrate are sealed using glass. Further, in each of Patent Documents 2 and 3, it is described that the peripheries of a transparent electrode substrate and a counter electrode substrate are sealed using a lead glass.

However, even in the case where the lead glass is used for the sealing material, a component of the lead glass is eluted into an iodine electrolyte solution due to long-term use, because the lead glass is easily eroded by the iodine electrolyte solution. As a result, the iodine electrolyte solution is degraded, and the cell performances deteriorate. Further, even in the case where the lead glass is used for overcoating a collector electrode or for forming a partition wall, there occurs deterioration of the collector electrode or tearing of the partition wall due to long-term use. Those phenomena are also caused by the erosion of the lead glass by the iodine electrolyte solution.

Further, when the softeningpoint of the sealingmaterial is higher than the strain point of a glass substrate, the glass substrate is deformed during a sealing process. Therefore, it is required that the sealing material (glass to be used for the sealing material) have a low-melting point property, e.g., a softening point of preferably 550°C or lower or more preferably 500°C or lower.

Accordingly, the present invention has a technical object to provide a dye-sensitized solar cell having high long-term reliability, by inventing a glass composition, which is hardly eroded by an iodine electrolyte solution and has a low-melting point property, and a material using the glass composition.

### Means for solving the Problems

The inventors of the present invention have conducted various studies and as a result, they have found that the above technical object can be solved by introducing SiO₂+Al₂O₃+ZrO₂ (a total amount of SiO₂, Al₂O₃, and ZrO₂) as an essential component into a glass composition of bismuth-based glass (Bi₂O₃-B₂O₃-based glass), and have proposed the finding as the present invention. That is, a glass composition for a dye-sensitized solar cell of the present invention is characterized by including, as a glass composition, in terms of mass%, 60 to 87% of Bi₂O₃, 3 to 12% of B₂O₃, 0 to 20% of ZnO, and 0.5 to 10% of SiO₂+Al₂O₃+ZrO₂. It should be noted that it becomes less likely that glass is eroded by the iodine electrolyte solution when SiO₂+Al₂O₃+ZrO₂ is introduced into the glass composition of the bismuth-based glass, but the mechanism thereof is not clear at the present time, and is currently under intensive investigation.

When the content of Bi₂O₃ is regulated to 60 to 87%, the melting point of the glass can be lowered while preventing a situation that the thermal stability of the glass is lowered. Further, when the content of B₂O₃ is regulated to 3 to 12%, the thermal stability of the glass can be improved while the low-melting point property of the glass is maintained. In addition, when the content of ZnO is regulated to 0 to 20%, the thermal stability of the glass can be improved.

When the content of SiO₂+Al₂O₃+ZrO₂ is regulated to 0.5 to 10%, it becomes less likely that the glass is eroded by the iodine electrolyte solution while the low-melting point property of the glass is maintained.

Second, the glass composition for a dye-sensitized solar cell of the present invention is characterized by including, as a glass composition, in terms of mass%, 60 to 87% of Bi₂O₃, 3 to 12% of B₂O₃, and 0 to 20% of ZnO, and having a mass reduction of 0.14 mg/cm² or less after being immersed in an iodine electrolyte solution at 25°C for 2 weeks. In such a manner, the melting point of the glass can be lowered while maintaining the thermal stability, and also, it becomes less likely that the glass is eroded by the iodine electrolyte solution.

Here, as the iodine electrolyte solution used for calculating the mass reduction, there is used a solution in which 0.1 M lithium iodide, 0.05 M iodine, 0.5 M tert-butylpyridine, and 0.6 M 1,2-dimethyl-3-propyl imidazolium iodide are dissolved in acetonitrile. Further, "mass reduction" is calculated by: immersing a glass substrate on which glass powder formed of the glass composition is densely baked (glass substrate having a baked film) in the iodine electrolyte solution inside a closed container; and dividing a value obtained by subtracting a mass after the elapse of 2 weeks from a mass before the immersion by an area of the baked film which is in contact with the iodine electrolyte solution. It should be noted that a glass substrate which is not eroded by the iodine electrolyte solution is used as the glass substrate.

In general, the iodine electrolyte solution refers to a solution in which iodine compounds such as iodine, an alkali metal iodide, an imidazolium iodide, or a quaternary ammonium salt is dissolved in an organic solvent, but also refers to a solution in which compounds other than the iodine compound are also dissolved, such as tert-butylpyridine and 1-methoxybenzoimidazole. As the solvent, there is used a nitrile-based solvent such as acetonitrile, methoxyacetonitrile, or propionitrile; a carbonate-based solvent such as ethylene carbonate or propylene carbonate; a lactone-based solvent; or the like. Regarding the iodine electrolyte solutions composed of those compounds and solvents, however, the above-mentioned problem that the glass is eroded by the iodine electrolyte solution may occur. Therefore, it is preferred that the glass composition for a dye-sensitized solar cell of the present invention have a mass reduction of 0.14 mg/cm² or less after being immersed in any one of those iodine electrolyte solutions at 25°C for 2 weeks.

Third, the glass composition for a dye-sensitized solar cell of the present invention is characterized by having a mass reduction of 0.1 mg/cm² or less after being immersed in an iodine electrolyte solution at 25°C for 2 weeks.

Fourth, the glass composition for adye-sensitizedsolar cell of the present invention is characterized by further including, as a glass composition, in terms of mass%, 0.1 to 15% of Fe₂O₃+CuO (a total amount of Fe₂O₃ and/or CuO). In such a manner, the thermal stability of the bismuth-based glass can be remarkably improved.

Fifth, the glass composition for a dye-sensitized solar cell of the present invention is characterized by further including, as a glass composition, in terms of mass%, 0.1 to 5% of Fe₂O₃. In such a manner, the erosion by the iodine electrolyte solution can be securely prevented.

Sixth, the glass composition for a dye-sensitized solar cell of the present invention is characterized by having a thermal expansion coefficient of 65 to 120X10⁻⁷/°C. Here, the "thermal expansion coefficient" refers to a value measured by a push-rod type thermal expansion coefficient measuring apparatus (TMA) in a temperature range of 30 to 300°C.

Seventh, a material for a dye-sensitized solar cell of the present invention is characterized by including 50 to 100 vol% of a glass powder formed of the glass composition for a dye-sensitized solar cell and 0 to 50 vol% of a refractory filler powder. It should be noted that the material for a dye-sensitized solar cell of the present invention includes an aspect in which the material is formed only of the glass powder formed of the glass composition. Further, in the material for a dye-sensitized solar cell of the present invention, the content of the refractory filler powder is, from the viewpoint of fluidity, preferably 25 vol% or less, 10 vol% or less, or 5 vol% or less, and particularly preferably 1 vol% or less, and it is more preferred that the material be substantially free of the refractory filler powder (to be specific, the content of the refractory filler powder is 0.5 vol% or less). Particularly in the case where the material is used for sealing, the gap between the transparent electrode substrate and the counter electrode substrate can be easily made small and uniform when the content of the refractory filler powder is reduced.

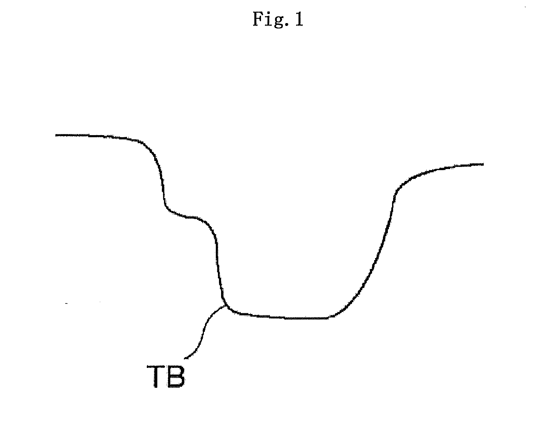

Eighth, the material for a dye-sensitized solar cell of the present invention is characterized by having a softening point of 550°C or lower. Here, the "softening point" refers to a value measured by a macro-type differential thermal analysis (DTA) apparatus. DTA initiates measurement from room temperature and has a rate of temperature rise of 10°C/min. It should be noted that the softening point measured by the macro-type DTA apparatus is represented by a temperature (Ts) at the fourth inflection point illustrated in FIG. 1.

Ninth, the material for a dye-sensitized solar cell of the present invention is characterized by being used for sealing. In particular, when the material for a dye-sensitized solar cell of the present invention is used for sealing, the material is preferably formed only of the glass powder, in order that the gap between the transparent electrode substrate and the counter electrode substrate is maintained uniformly. Here, the sealing includes sealing of a glass tube or the like in addition to sealing of the transparent electrode substrate and the counter electrode substrate. It should be noted that there is a case where multiple openings are provided on the transparent electrode substrate, the counter electrode substrate, and the like, and glass tubes are sealed to the respective multiple openings, and after that, a liquid containing a pigment or the like is circulated inside the dye-sensitized solar cell via the glass tubes, whereby the pigment is adsorbed to a porous oxide semiconductor. In this case, it becomes less likely that the leakage of the liquid or the like, etc. occur when the glass tubes are sealed using the material for a dye-sensitized solar cell of the present invention.

Tenth, the material for a dye-sensitized solar cell of the present invention is characterized by being used for a sealing treatment by a laser beam. In such a manner, the sealing treatment can be performed without causing heat deterioration of the constituent member of the dye-sensitized solar cell.

Eleventh, the material for a dye-sensitized solar cell of the present invention is characterized by being used for overcoating a collector electrode.

### Effects of the Invention

In the glass composition for a dye-sensitized solar cell of the present invention, when SiO₂+Al₂O₃+ZrO₂ is introduced as an essential component into the glass composition of bismuth-based glass, the erosion by the iodine electrolyte solution hardly occurs. Further, in the glass composition for a dye-sensitized solar cell of the present invention, the mass reduction after being immersed in the iodine electrolyte solution at 25°C for 2 weeks can be set to 0.1 mg/cm² or less. As a result, a sealed part, a partition wall, and a overcoated part are hardly eroded by the iodine electrolyte solution, and the degradation of the iodine electrolyte solution and the cell performances can be prevented for a long period of time.

### Brief Description of the Drawing

FIG. 1 is a schematic diagram illustrating a softening point measured by a macro-type DTA apparatus.

### Best Mode for carrying out the Invention

In a glass composition for a dye-sensitized solar cell of the present invention, the reason for limiting the range of a glass composition to the above range is described below. It should be noted that, unless otherwise mentioned, "%" used below means "mass%".

Bi₂O₃ is a main component for lowering the softening point, and the content of Bi₂O₃ is 60 to 87%, preferably 70 to 85%, more preferably 71 to 83%, and still more preferably 73 to 82%. When the content of Bi₂O₃ is small, the softening point becomes too high, and it becomes less likely that sealing can be performed at low temperatures. On the other hand, when the content of Bi₂O₃ is large, the glass becomes thermally unstable and is easily devitrified at the time of melting or baking.

B₂O₃ is a component which forms a glass network of bismuth-based glass, and the content of B₂O₃ is 3 to 12%, preferably 3 to 10%, more preferably 4 to 10%, and still more preferably 5 to 9%. When the content of B₂O₃ is small, the glass becomes thermally unstable and is easily devitrified at the time of melting or baking. On the other hand, when the content of B₂O₃ is large, the viscosity becomes too high, and it becomes difficult to perform sealing at low temperatures.

ZnO is a component which suppresses the devitrification at the time of melting or baking, and the content of ZnO is 0 to 20%, preferably 1 to 20%, more preferably 3 to 15%, still more preferably 4 to 12%, and particularly preferably 5 to less than 10%. When the content of ZnO is too large, the balance among the components of the glass composition is disturbed, and the other way around, the thermal stability of the glass is deteriorated, with the result that the glass is easily devitrified.

SiO₂+Al₂O₃+ZrO₂ is a component which makes it less likely that the erosion by the iodine electrolyte solution occurs, and the content of SiO₂+Al₂O₃+ZrO₂ is preferably 0.5 to 10%, 0.9 to 6%, or 1 to 4.5%, and particularly preferably 1 to 4%. When the content of SiO₂+Al₂O₃+ZrO₂ is small, the glass is easily eroded by the iodine electrolyte solution, and the degradation of the iodine electrolyte solution and the cell performances can be prevented for a long period of time.

SiO₂ is a component which makes it less likely that the erosion by the iodine electrolyte solution occurs, and the content of SiO₂ is 0 to 10%, preferably 0.5 to 10%, more preferably 0.9 to 6% or 1 to 4.5%, and still more preferably 1 to 4%. When the content of SiO₂ is large, the softening point becomes too high, and it becomes difficult to perform sealing at low temperatures.

Al₂O₃ is a component which makes it less likely that the erosion by the iodine electrolyte solution occurs, and the content of Al₂O₃ is 0 to 5% and preferably 0 to 3%. When the content of Al₂O₃ is large, the softening point becomes too high, and it becomes difficult to perform sealing at low temperatures.

ZrO₂ is a component which makes it less likely that the erosion by the iodine electrolyte solution occurs, and the content of ZrO₂ is 0 to 5% and preferably 0 to 3%. When the content of ZrO₂ is large, the softening point becomes too high, and it becomes difficult to perform sealing at low temperatures.

In the above glass composition range, the glass composition can contain, apart from the above components, up to 20% (preferably 15%) of the following components.

Fe₂O₃+CuO is an optional component and is a component which suppresses the devitrification at the time of melting or baking. The content of Fe₂O₃+CuO is 0 to 15%, preferably 0.1 to 15%, more preferably 0.3 to 8%, and still more preferably 0.5 to 5%. When the content of Fe₂O₃+CuO is more than 15%, the balance among the components of the glass composition is disturbed, and the other way around, the thermal stability of the glass is deteriorated, with the result that the glass is easily devitrified and that the fluidity of the glass is easily deteriorated. It should be noted that, in order to improve the thermal stability of the glass, it is preferred that the content of Fe₂O₃+CuO be 0.1% or more.

CuO is an optional component and is a component which suppresses the devitrification at the time of melting or baking. CuO can be added to the glass composition up to 10%. When the content of CuO is more than 10%, the balance among the components of the glass composition is disturbed, and the other way around, the thermal stability of the glass is deteriorated, with the result that the glass is easily devitrified and that the fluidity of the glass is easily deteriorated. Further, when the content of CuO is regulated to 0.3 to 5%, and particularly to 0.5 to 3%, the thermal stability of the glass can be remarkably improved.

Fe₂O₃ is, as well as being a component which makes it less likely that the erosion by the iodine electrolyte solution occurs, a component which suppresses the devitrification at the time of melting or baking. The content of Fe₂O₃ is 0 to 10% or 0.1 to 5%, preferably 0.3 to 4.5%, and more preferably 0.5 to 4%. When the content of Fe₂O₃ is small, and in particular, when the content of Fe₂O₃ is smaller than 0.5%, the glass is easily eroded by the iodine electrolyte solution, and it becomes difficult to prevent the degradation of the iodine electrolyte solution and the cell performances for a long period of time. When the content of Fe₂O₃ is more than 10%, and in particular, when the content is more than 5%, the balance among the components of the glass composition is disturbed, and the other way around, the thermal stability of the glass is deteriorated, with the result that the glass is easily devitrified and that the fluidity of the glass is easily deteriorated.

BaO, SrO, MgO, and CaO are components which suppress the devitrification at the time of melting or baking. BaO, SrO, MgO, and CaO can be added to the glass composition up to 15% in a total amount. When the total amount of those components is large, the softening point becomes too high, and it becomes less likely that sealing can be performed at low temperatures.

The content of BaO is preferably 0 to 10% and more preferably 1 to 7%. When the content of BaO is too large, the balance among the components of the glass composition is disturbed, and the other way around, the thermal stability of the glass is deteriorated, with the result that the glass is easily devitrified. Further, from the viewpoint of improving the thermal stability of the glass, it is preferred that the content of BaO be 1% or more.

The content of each of SrO, MgO, and CaO is preferably 0 to 5% and more preferably 0 to 2%. When the content of each component is more than 5%, the glass is easily devitrified or easily undergoes phase separation.

CeO₂ is a component which suppresses the devitrification at the time of melting or baking, and the content of CeO₂ is 0 to 5%, preferably 0 to 2%, and more preferably 0 to 1%. When the content of CeO₂ is too large, the balance among the components of the glass composition is disturbed, and the other way around, the thermal stability of the glass is deteriorated, with the result that the glass is easily devitrified and that the fluidity of the glass is easily deteriorated. Further, from the viewpoint of improving the thermal stability of the glass, it is preferred that an extremely small amount of CeO₂ be added to the glass composition, and to be specific, it is preferred that the content of CeO₂ be 0.01% or more.

Sb₂O₃ is a component for suppressing the devitrification, and the content of Sb₂O₃ is 0 to 5%, preferably 0 to 2%, and more preferably 0 to 1%. Sb₂O₃ has an effect of stabilizing the network structure of bismuth-based glass, and when an appropriate amount of Sb₂O₃ is added to the bismuth-based glass, it becomes less likely that the thermal stability of the glass is lowered even in the case where the content of Bi₂O₃ is large, for example, in the case where the content of Bi₂O₃ is 76% or more. However, when the content of Sb₂O₃ is too large, the balance among the components of the glass composition is disturbed, and the other way around, the thermal stability of the glass is deteriorated, with the result that the glass is easily devitrified. Further, from the viewpoint of improving the thermal stability of the glass, it is preferred that an extremely small amount of Sb₂O₃ be added to the glass composition, and to be specific, it is preferred that the content of Sb₂O₃ be 0.05% or more.

WO₃ is a component for suppressing the devitrification, and the content of WO₃ is preferably 0 to 10% and more preferably 0 to 2%. However, when the content of WO₃ is too large, the balance among the components of the glass composition is disturbed, and the other way around, the thermal stability of the glass is deteriorated, with the result that the glass is easily devitrified.

In₂O₃ and Ga₂O₃ are not essential components, but are components for suppressing the devitrification, and the content of the total amount of In₂O₃ and Ga₂O₃ is preferably 0 to 5% and more preferably 0 to 3%. However, when the total amount of In₂O₃ and Ga₂O₃ is too large, the balance among the components of the glass composition is disturbed, and the other way around, the thermal stability of the glass is deteriorated, with the result that the glass is easily devitrified. It should be noted that the content of In₂O₃ is more preferably 0 to 1% and the content of Ga₂O₃ is more preferably 0 to 0.5%.

The oxides of Li, Na, K, and Cs are components which lower the softening point, but each have an action of promoting the devitrification at the time of melting, and hence, the content of the oxides of Li, Na, K, and Cs in a total amount is preferably 2% or less.

P₂O₅ is a component which suppresses the devitrification at the time of melting, and when the addition amount of P₂O₅ is more than 1%, the glass easily undergoes phase separation at the time of melting, and hence, the content of more than 1% is not preferred.

MoO₃, La₂O₃, Y₂O₃, and Gd₂O₃ are components which suppress the phase separation of the glass at the time of melting, and when the total amount of MoO₃, La₂O₃, Y₂O₃, and Gd₂O₃ is more than 3%, the softening point becomes too high, and it becomes less likely that sealing can be performed at low temperatures.

Further, another component can be added to the glass composition in a range in which glass performances are not impaired, i.e., in a range of up to 10% (preferably up to 5%). It should be noted that, from the environmental viewpoint and the viewpoint of preventing the erosion by an iodine electrolyte solution, it is preferred that the glass composition for a dye-sensitized solar cell of the present invention be substantially free of PbO. Here, the phrase "be substantially free of PbO" refers to the case where the content of PbO in the glass composition is 1,000 ppm or less.

In the glass composition for a dye-sensitized solar cell of the present invention, the mass reduction after being immersed in an iodine electrolyte solution at 25°C for 2 weeks is preferably 0.14 mg/cm² or less, 0.1 mg/cm² or less, or 0.05 mg/cm² or less, and it is particularly preferred that there be substantially no mass reduction. When the mass reduction is 0.14 mg/cm² or less, and particularly 0.1 mg/cm² or less, the degradation of the iodine electrolyte solution and the cell performances can be prevented for a long period of time. Here, the phrase "be substantially no mass reduction" refers to the case where the mass reduction is 0.01 mg/cm² or less.

In the glass composition for a dye-sensitized solar cell of the present invention, a second mode of the invention includes, as a glass composition, in terms of mass%, 60 to 87% of Bi₂O₃, 3 to 12% of B₂O₃, and 0 to 20% of ZnO, and has a mass reduction of 0.14 mg/cm² or less after being immersed in an iodine electrolyte solution at 25°C for 2 weeks. Here, the preferred component range of the glass composition and the preferred mode of the glass composition are described above or to be described later, and hence, as a matter of convenience, the description in detail is omitted here. It should be noted that, in the second mode of the invention, SiO₂+Al₂O₃+ZrO₂ is an optional component and is not an essential component.

In the glass composition for a dye-sensitized solar cell of the present invention, the thermal expansion coefficient is preferably 65 to 120×10⁻⁷/°C, more preferably 70 to 110×10⁻⁷/°C, and particularly preferably 80 to 100×10⁻⁷/°C. When the difference between the thermal expansion coefficient of the glass composition for a dye-sensitized solar cell of the present invention and the thermal expansion coefficient of a glass substrate (e.g., soda glass substrate) used for the transparent electrode substrate or the like is too large, there remains undue stress on the glass substrate, a sealed part, or the like after baking, and hence, it becomes more likely that a crack is generated on the glass substrate, the sealed part, or the like, or peeling occurs at the sealed part.

The material for a dye-sensitized solar cell of the present invention may contain a refractory filler powder in order to improve the mechanical strength or to decrease the thermal expansion coefficient. On the other hand, if the addition amount of the refractory filler powder is decreased, the fluidity, or in particular, the sealing property, of the material for a dye-sensitized solar cell can be enhanced. Accordingly, the mixing ratio is 50 to 100 vol% of the glass powder to 0 to 50 vol% of the refractory filler powder, preferably 65 to 100 vol% of the glass powder to 0 to 35 vol% of the refractory filler powder, more preferably 75 to 100 vol% of the glass powder to 0 to 25 vol% of the refractory filler powder, still more preferably 90 to 100 vol% of the glass powder to 0 to 10 vol% of the refractory filler powder, and particularly preferably 95 to 100 vol% of the glass powder to 0 to 5 vol% of the refractory filler powder, and it is desired that, from the reasons stated above, the material be substantially free of the refractory filler powder. When the content of the refractory filler powder is more than 50 vol%, the ratio of the glass powder relatively becomes too low, and hence, it becomes difficult to obtain the desired fluidity.

In the material for a dye-sensitized solar cell of the present invention, the thermal expansion coefficient is preferably 65 to 120×10⁻⁷/°C and more preferably 70 to 100×10⁻⁷/°C. When the difference between the thermal expansion coefficient of the material for a dye-sensitized solar cell of the present invention and the thermal expansion coefficient of a glass substrate (e.g., soda glass substrate) used for the transparent electrode substrate or the like is too large, there remains undue stress on the glass substrate, a sealed part, or the like after baking, and hence, it becomes more likely that a crack is generated on the glass substrate, the sealed part, or the like, or peeling occurs at the sealed part.

In general, the cell gap of the dye-sensitized solar cell is 50 µm or less, which is extremely small. Therefore, when the particle size of the refractory filler powder is too large, a protrusion is generated locally at the sealed part, and hence, it becomes difficult to make the cell gap uniform. In order to prevent such situation, the maximum particle size of the refractory filler powder is preferably 25 µm or less and more preferably 15 µm or less. Here, the "maximum particle size" refers to the particle size of a particle in which, in a cumulative particle size distribution curve on a volumetric basis when measured by a laser diffraction method, the integrated quantity thereof is 99% when accumulated in the order starting from the particle having the smallest particle size.

The material of the refractory filler powder is not particularly limited, and is preferably a material which hardly reacts with the glass powder formed of the glass composition for a dye-sensitized solar cell of the present invention and the iodine electrolyte solution. Specifically, as the refractory filler powder, there can be used zircon, zirconia, tin oxide, aluminum titanate, quartz, β-spodumene, mullite, titania, quartz glass, β-eucryptite, β-quartz, zirconium phosphate, zirconium phosphotungstate, zirconium tungstate, willemite, a compound having a basic structure of NZP type such as [AB₂(MO₄)₃], where A represents Li, Na, K, Mg, Ca, Sr, Ba, Zn, Cu, Ni, Mn, or the like, B represents Zr, Ti, Sn, Nb, Al, Sc, Y, or the like, and M represents P, Si, W, Mo, or the like, and a solid solution thereof. Particularly preferred is cordierite, because cordierite has a low thermal expansion coefficient and good compatibility with bismuth-based glass.

In the material for a dye-sensitized solar cell of the present invention, the softening point is preferably 550°C or lower and more preferably 500°C or lower. When the softening point is higher than 500°C, the viscosity becomes too high and the sealing temperature is unduly increased, and hence, the glass substrate is easily deformed. Further, in the case where the material for a dye-sensitized solar cell and a porous oxide semiconductor layer are baked simultaneously, the fusion of oxide semiconductor particles may proceed too much when the sealing temperature is too high. In such a case, the surface area of the porous oxide semiconductor layer decreases, which makes it less likely that a pigment is adsorbed thereto.

In the material for a dye-sensitized solar cell of the present invention, the mass reduction after being immersed in an iodine electrolyte solution at 25°C for 2 weeks is 0.1 mg/cm² or less and preferably 0.05 mg/cm² or less, and it is desired that there be substantially no mass reduction. When the mass reduction is 0.1 mg/cm² or less, the deterioration of the iodine electrolyte solution and the cell performances can be prevented for a long period of time.

The material for a dye-sensitized solar cell of the present invention in a powder form may be used as it is, and when the material is kneaded homogeneously with a vehicle and processed into a paste, it becomes easier to handle. The vehicle is mainly composed of a solvent and a resin, and the resin is added thereto for adjusting the viscosity of the paste. Further, a surfactant, a thickener, or the like may also be added thereto, if required. The produced paste is subjected to coating by using a coating machine such as a dispenser or a screen printing machine.

As the resin, there can be used an acrylate (acrylic resin), ethylcellulose, a polyethylene glycol derivative, nitrocellulose, polymethylstyrene, polyethylene carbonate, a methacrylate, and the like. In particular, an acrylate and nitrocellulose are preferred because of having a good thermolytic property.

As the solvent, there can be usedN,N'-dimethyl formamide (DMF),α-terpineol, a higher alcohol, γ-butyrolactone (γ-BL), tetralin, butylcarbitol acetate, ethyl acetate, isoamyl acetate, diethylene glycol monoethyl ether, diethylene glycol monoethyl ether acetate, benzyl alcohol, toluene, 3-methoxy-3-methylbutanol, triethylene glycol monomethyl ether, triethylene glycol dimethyl ether, dipropylene glycol monomethyl ether, dipropylene glycol monobutyl ether, tripropylene glycol monomethyl ether, tripropylene glycol monobutyl ether, propylene carbonate, dimethyl sulfoxide (DMSO), N-methyl-2-pyrrolidone, and the like. In particular, α-terpineol is preferred because of having high viscosity and good solubility of a resin and the like.

The material for a dye-sensitized solar cell of the present invention is preferably used for a sealing purpose, and particularly preferably used for sealing a transparent electrode substrate and a counter electrode substrate. The material for a dye-sensitized solar cell of the present invention has a low-melting point property and is hardly eroded by the iodine electrolyte solution, and hence, the iodine electrolyte solution hardly leaks due to long-term use and the prolonged lifetime of the solar cell can be expected. Further, in the case where the material is used for sealing the transparent electrode substrate and the counter electrode substrate, a spacer such as a glass bead may be added to the material for a dye-sensitized solar cell of the present invention in order to make the cell gap of the solar cell uniform.

The material for a dye-sensitized solar cell of the present invention is preferably subjected to a sealing treatment by a laser beam. When the laser beam is used, the material for a dye-sensitized solar cell can be locally heated. Therefore, the transparent electrode substrate and the counter electrode substrate can be sealed while preventing the heat deterioration of a constituent member such as the iodine electrolyte solution.

In the case where the transparent electrode substrate and the counter electrode substrate are sealed by using the laser beam, the material for a dye-sensitized solar cell of the present invention contains, as a glass component, preferably 0.1 to 15%, 0.5 to 10%, 1.5 to 8%, or 2 to 7%, and particularly preferably 3 to 6% of CuO+Fe₂O₃. When the content of CuO+Fe₂O₃ is regulated to 0.1% or more, and particularly to 0.5% or more, light energy of the laser beam can be effectively converted into heat energy, in other words, the laser beam can be absorbed to the glass accurately, and hence, only the parts to be sealed can be locally heated. On the other hand, when the content of CuO+Fe₂O₃ is regulated to 15% or less, and particularly to 10% or less, a situation that the glass is devitrified at the time of irradiation of the laser beam can be prevented. Here, various laser beams can be used as the laser beams, and in particular, a semiconductor laser, a YAG laser, a CO₂ laser, an excimer laser, an infrared laser, and the like are suitable, because they are easy to handle. Further, in order to allow the glass to absorb the laser beam accurately, the laser beam preferably has an emission center wavelength of 500 to 1,600 nm and preferably 750 to 1,300 nm.

The material for a dye-sensitized solar cell of the present invention is preferably used for overcoating a collector electrode. In general, there is usedAg for the collector electrode, but Ag is easily eroded by the iodine electrolyte solution. Accordingly, in the case where Ag is used for the collector electrode, the collector electrode needs to be protected. The material for a dye-sensitized solar cell of the present invention has a low-melting point property, and hence, a dense overcoating layer can be formed at low temperatures. In addition, the material is hardly eroded by the iodine electrolyte solution, and hence can protect the collector electrode for a long period of time.

The material for a dye-sensitized solar cell of the present invention can be used for forming a partition wall. In general, in the case where the partition wall is formed in the dye-sensitized solar cell, the inside of the cell is filled with the iodine electrolyte solution. The material for a dye-sensitized solar cell of the present invention has a low-melting point property, and hence, a dense partition wall can be formed at low temperatures. In addition, the material is hardly eroded by the iodine electrolyte solution, and hence can prevent tearing of the partition wall for a long period of time.

### Examples

The present invention is described in detail based on examples. Tables 1 and 2 show Examples (Sample Nos. 1 to 13) of the present invention and Table 3 shows Comparative Examples (Sample Nos. 14 to 16).

**[Table 1]**

| | | Example | | | | | | |
|---|---|---|---|---|---|---|---|---|
| | | 1 | 2 | 3 | 4 | 5 | 6 | 7 |
| Glass composition (mass%) | Bi₂O₃ | 75.9 | 75.2 | 79.0 | 80.9 | 75.0 | 74.7 | 76.5 |
| | B₂O₃ | 8.7 | 8.1 | 8.6 | 6.2 | 8.8 | 8.6 | 8.7 |
| | ZnO | 9.4 | 8.6 | 7.5 | 9.2 | 9.5 | 9.3 | 9.3 |
| | SiO₂ | 1.9 | 1.0 | 2.5 | 1.5 | 2.0 | 1.0 | 1.9 |
| | BaO | 1.7 | 4.7 | - | 0.3 | 1.7 | 1.7 | 1.7 |
| | CuO | 1.9 | 1.9 | 1.9 | 1.5 | 2.0 | 1.9 | 1.9 |
| | Fe₂O₃ | 0.5 | 0.5 | 0.5 | 0.4 | 1.0 | 3.0 | - |
| Refractory filler powder (vol%) | | Absent | Absent | Absent | Absent | Absent | Absent | Absent |
| Thermal expansion coefficient (10⁻⁷/°C) | | 98 | 104 | 95 | 105 | 96 | 91 | 98 |
| Softening point (°C) | | 455 | 440 | 456 | 428 | 456 | 454 | 450 |
| Mass reduction (mg/cm²) | | 0.00 | 0.10 | 0.00 | 0.10 | 0.00 | 0.00 | 0.14 |

**[Table 2]**

| | | Example | | | | | |
|---|---|---|---|---|---|---|---|
| | | 8 | 9 | 10 | 11 | 12 | 13 |
| Glass composition (mass%) | Bi₂O₃ | 73.6 | 71.9 | 73.3 | 70.7 | 78.1 | 79.5 |
| | B₂O₃ | 9.2 | 9.2 | 9.3 | 9.9 | 8.5 | 8.0 |
| | ZnO | 9.9 | 9.9 | 10.0 | 10.6 | 9.1 | 8.6 |
| | SiO₂ | 2.0 | 2.0 | 3.0 | 4.1 | 1.9 | 1.8 |
| | BaO | 1.8 | 1.8 | 1.8 | 1.9 | - | 1.6 |
| | CuO | 3.0 | 2.0 | 2.1 | 2.2 | 1.9 | - |
| | Fe₂O₃ | 0.5 | 3.2 | 0.5 | 0.6 | 0.5 | 0.5 |
| Refractory filler powder (vol%) | | Absent | Absent | Absent | Absent | Cordierite 17.5 | Cordierite 20 |
| Thermal expansion coefficient (10⁻⁷/°C) | | 95 | 91 | 92 | 88 | 76 | 79 |
| Softening point (°C) | | 460 | 472 | 470 | 485 | 447 | 438 |
| Mass reduction (mg/cm²) | | 0.07 | 0.00 | 0.03 | 0.03 | 0.04 | 0.04 |

**[Table 3]**

| | | Comparative Example | | |
|---|---|---|---|---|
| | | 14 | 15 | 16 |
| Glass composition (mass%) | Bi₂O₃ | 77.3 | 76.4 | - |
| | B₂O₃ | 8.1 | 7.0 | 12.7 |
| | ZnO | 6.4 | 11.1 | - |
| | SiO₂ | - | - | 1.0 |
| | BaO | 5.8 | 4.0 | - |
| | CuO | 1.9 | 1.5 | - |
| | Fe₂O₃ | 0.5 | - | - |
| | PbO | - | - | 85.3 |
| | Al₂O₃ | - | - | 1.0 |
| Refractory filler powder (vol%) | | Absent | Absent | PbTiO₃ 37 |
| Thermal expansion coefficient (10⁻⁷/°C) | | 110 | 110 | 73 |
| Softening point (°C) | | 433 | 424 | 390 |
| Mass reduction (mg/cm²) | | 0.17 | 0.29 | 0.32 |

Each of the samples described in the tables was prepared as follows. First, a glass batch in which raw materials such as various oxides and carbonates were mixed so as to have a glass composition shown in the tables was prepared, and was then loaded into a platinum crucible and melted at 1,000 to 1,200°C for 1 to 2 hours. Next, a part of the molten glass, which serves as a sample for measuring a thermal expansion coefficient, was poured into a die made of stainless steel, and the remaining molten glass was formed into a flaky shape with a water cooled roller. The sample for measuring a thermal expansion coefficient was subjected to a predetermined annealing treatment after being formed into the flaky shape. Finally, the flaky glass was pulverized with a ball mill and then allowed to pass through a sieve having a mesh of 75 µm, whereby each glass powder having an average particle size of about 10 µm was obtained. It should be noted that each of Sample Nos. 12, 13, and 16 is a sample which was obtained by adding the refractory filler powder (average particle size of 10 µm) shown in the tables to the glass composition at each of the ratios shown in the tables and mixing the resultant.

Next, each glass powder (mixed powder in the case of Sample Nos. 12, 13, and 16) and a vehicle (which was obtained by dissolving ethylcellulose in α-terpineol) were kneaded into a paste. The paste was screen printed on a soda glass substrate (thermal expansion coefficient: 100×10⁻⁷/°C) so as to have a diameter of 40 mm and a thickness of 40 to 80 µm, followed by drying at 120°C for 10 minutes and then baking at 500°C for 30 minutes in an electric furnace, whereby a sample for evaluating mass reduction was obtained.

The above samples were used, and the thermal expansion coefficient, the softening point, and the mass reduction with respect to an iodine electrolyte solution were evaluated. The results are shown in Tables 1 to 3.

The thermal expansion coefficient was measured by a TMA measuring apparatus. The thermal expansion coefficient was measured in a temperature range of 30 to 300°C. It should be noted that each of Sample Nos. 12, 13, and 16 was processed to have a predetermined shape by densely sintering the mixed powder, and then was used as a measurement sample.

The softening point was determined by a DTA apparatus. The measurement was performed in air and the rate of temperature rise was set to 10°C/min.

The mass reduction was calculated as follows. First, the mass of the sample for evaluating mass reduction and the surface area of the baked film which was in contact with the iodine electrolyte solution were measured. Next, the sample was immersed in the iodine electrolyte solution inside a closed container made of glass, and then the closed container made of glass was left standing still in a thermostat at 25°C. The mass reduction was calculated by dividing a value obtained by subtracting the mass of the sample after the elapse of 2 weeks from the mass of the sample before the immersion by the surface area of the baked film. As the iodine electrolyte solution used for the evaluation of the mass reduction, there was used a solution in which 0.1 M lithium iodide, 0.05 M iodine, 0.5 M tert-butylpyridine, and 0.6 M 1,2-dimethyl-3-propyl imidazolium iodide were added to acetonitrile.

As clear from Tables 1 and 2, Sample Nos. 1 to 13 each had a thermal expansion coefficient of 76 to 105×10⁻⁷/°C and a softening point of 428 to 485°C. Further, in each sample for measuring mass reduction, the baked film satisfactorily adhered to the glass substrate without causing peeling. In addition, Sample Nos. 1 to 13 each had a mass reduction of 0.14 mg/cm² or less, so Sample Nos. 1 to 13 were hardly eroded by the iodine electrolyte solution. On the other hand, Sample No. 14 had a mass reduction of 0.17 mg/cm², because Sample No. 14 did not contain SiO₂+Al₂O₃+ZrO₂ in the glass composition, so Sample No. 14 was eroded by the iodine electrolyte solution. Sample No. 15 had a mass reduction of 0.29 mg/cm², because Sample No. 15 did not contain SiO₂+Al₂O₃+ZrO₂ in the glass composition, so Sample No. 15 was eroded by the iodine electrolyte solution. Sample No. 16 had a mass reduction of 0.32 mg/cm², because Sample No. 16 used lead glass, so Sample No. 16 was eroded by the iodine electrolyte solution.

### Industrial Applicability

The glass composition for a dye-sensitized solar cell and the material for a dye-sensitized solar cell of the present invention are suitable for sealing the transparent electrode substrate and the counter electrode substrate of a dye-sensitized solar cell, forming the partition wall for dividing cells, and overcoating the collector electrode.

## Claims

1. A glass composition for a dye-sensitized solar cell, comprising, as a glass composition, in terms of mass%, 60 to 87% of Bi₂O₃, 3 to 12% of B₂O₃, 0 to 20% of ZnO, and 0.5 to 10% of SiO₂+Al₂O₃+ZrO₂.

2. A glass composition for a dye-sensitized solar cell, comprising, as a glass composition, in terms of mass%, 60 to 87% of Bi₂O₃, 3 to 12% of B₂O₃, and 0 to 20% of ZnO, and has a mass reduction of 0.14 mg/cm² or less after being immersed in an iodine electrolyte solution at 25°C for 2 weeks.

3. A glass composition for a dye-sensitized solar cell according to claim 1 or 2, which has a mass reduction of 0.1 mg/cm² or less after being immersed in an iodine electrolyte solution at 25°C for 2 weeks.

4. A glass composition for a dye-sensitized solar cell according to any one of claims 1 to 3, which further comprises, as a glass composition, in terms of mass%, 0.1 to 15% of Fe₂O₃+CuO.

5. A glass composition for a dye-sensitized solar cell according to any one of claims 1 to 4, which further comprises, as a glass composition, in terms of mass%, 0.1 to 5% of Fe₂O₃.

6. A glass composition for a dye-sensitized solar cell according to any one of claims 1 to 5, which has a thermal expansion coefficient of 65 to 120×10⁻⁷/°C.

7. A material for a dye-sensitized solar cell, comprising:
50 to 100 vol% of a glass powder formed of the glass composition for a dye-sensitized solar cell according to any one of claims 1 to 6; and
0 to 50 vol% of a refractory filler powder.

8. A material for a dye-sensitized solar cell according to claim 7, which has a softening point of 550°C or lower.

9. A material for a dye-sensitized solar cell according to claim 7 or 8, which is used for sealing.

10. A material for a dye-sensitized solar cell according to claim 9, which is used for sealing by a laser beam.

11. A material for a dye-sensitized solar cell according to claim 7 or 8, which is used for overcoating a collector electrode.
